# EUROPEAN PATENT APPLICATION

(11) **EP 2 387 177 A1**
(43) Date of publication of application: **16.11.2011**
(21) Application number: 10305499.5
(22) Date of filing: 11.05.2010
(51) Int. Cl.: H04L 12/18, H04L 29/08, H04L 29/06

(54) **Content distribution in a P2P infrastructure by means of multicast connections**

(71) Applicant: Thomson Licensing, 92130 Issy-les-Moulineaux (FR)
(72) Inventor: Champel, Mary-Luc, 92443, ISSY LES MOULINEAUX cedex (FR); Houeix, Pierre, 92443, ISSY LES MOULINEAUX cedex (FR); Neumann, Christoph, 92443, ISSY LES MOULINEAUX cedex (FR)
(74) Representative: Ruellan-Lemonnier, Brigitte

(57) **Abstract**

A control server (CTS) is intended for controlling content distribution to peers (P1-P4) coupled to a communication network (CN) which comprises at least one content serving means (CNS, N1-N3) storing contents. This control server (CTS) is arranged i) for transmitting messages to these peers (P1-P4) to inform them that a content will soon be distributed by means of an identified multicast session, and to identify content parts that have been respectively associated to them, and ii) for ordering at least one content serving means (CNS) to initiate this identified multicast session to transmit the content to the peers (P1-P4), in order those having decided to listen to the multicast session store the content parts that have been identified into their respective messages.

## Description

### Technical field

The present invention relates to content distribution, such as Video-on-Demand (or VOD) for instance, and more precisely to content distribution, notably in a peer-to-peer (or P2P) mode.

One means here by "content distribution" a service allowing a client (i.e. a peer) to receive content(s) that are initially provided by a service provider through at least one content serving means accessible through a communication network.

Moreover, one means here by "content" any type of set of data that can be distributed, notably in a P2P mode, and notably files of information data, videos, chunks of video, pictures to share, html files, audio files and software updates, and more generally any type of file.

More, one means here by "peer" a communication equipment capable of exchanging data (or symbols (i.e. blocks or packets or chunks of data)) with other peers or network equipments, notably in a P2P mode, through communications, possibly of the wireless type. So, a peer may be a computer, a laptop, a smartphone, a fixed or mobile (or cellular) telephone, a personal digital assistant (or PDA), provided that it comprises a communication interface (or any equivalent communication means), possibly of the wireless type, or a base station that is assisting opportunistic content delivery in an area (such as a content "booth" (or a "throwbox")), or else a content receiver, such as a home gateway (connected through DSL or cable) or a set-top box (STB) that is located in home premises.

### Background of the invention

As it is known by the man skilled in the art, there are at least two communication architectures that allow content (or content item) distribution, notably in a peer-to-peer (or P2P) mode, to and between peers.

A first communication architecture is the so called centralized P2P architecture (such as BitTorrent, for instance). It comprises a central server in charge of managing unicast communications (or connections) between peers to allow contents to be exchanged therebetween (and only therebetween).

A second communication architecture is the so called hybrid P2P/CDN (or "Content Distribution (or Delivery) Network") architecture. It is recalled that a CDN is a set of computers that are connected therebetween through a network (into which they constitute nodes located at key locations) and that store copies of contents to optimize content distribution to peers. So, a CDN allows contents to be always accessible and downloaded fast enough when not enough peers are present (i.e. connected). In this last case, the CDN distributes parts of contents to many peers while a central server regulates how every peer can download contents from other peers. In such hybrid architecture, a requesting peer informs the central server about the content(s) it wants to download. Then the central server sends it a list of other peers (possibly including a link to the CDN as a fallback peer) from which it can get the desired content at the considered instant. Finally, the requesting peer can initiate several unicast communications with every peers, or only a selection of peers, and/or the CDN mentioned into the list, to download the requested content(s).

This hybrid architecture works fine, but it presents some drawbacks:
- when many peers request a same content or different contents, a lot of unicast communications (or connections) have to be created. This may result in an overuse of the available bandwidth, for instance at a DSLAM level ("Digital Subscriber Line Access Multiplexer"),
- when several peers request the same content items from the same peer or CDN, they both have to create their own unicast connections to this same peer or CDN and therefore each requesting peer has to wait that the other requesting peers that have started to download before it have finished their respective downloading before it can start its own downloading. This results in a waste of bandwidth and a possible delay of download,
- when several peers request different parts or items of a same content, they may each create a unicast connection to the same peer and therefore some content items or parts may be sent several times. This also results in a waste of bandwidth. For instance, when several peers request the same content into different windows (or time parts), the peer, that requests a content part that is contained into a window occurring sooner in time in a stream than the other windows, could also benefit from receiving the other content parts contained into the following windows since it will have to download them anyway soon. This multiplies opportunity to get benefit of the solution, while getting chunks in advance in a classical centralized P2P architecture does not bring so immediate benefit.

So, the above mentioned architectures may be quite heavy when a lot of peers ask for the same content, since they only rely on unicast communications between couples of peers.

### Summary of the invention

Therefore, the object of this invention is to improve the situation by overcoming the above mentioned drawbacks (or issues) at least partly.

For this purpose, the invention provides a first method, intended for distributing contents to peers coupled to a communication network, which comprises at least one content serving means storing these contents and a control server for controlling content distribution to these peers, and comprising the steps of:
i) transmitting messages from the control server to the peers to inform them that a content will soon be distributed by means of an identified multicast session, and to identify parts of this content that have been respectively associated to them, and
ii) initiating this identified multicast session from at least one content serving means to transmit the content to the peers, in order those having decided to listen to this multicast session store the content parts that have been identified into their respective messages.

The first method according to the invention may include additional characteristics considered separately or combined, and notably:
- in step (i) each message may contain an information which is chosen from a group comprising at least a list of identifiers of content parts, data representative of a modulo that must be used by the corresponding peer to identify the content parts to be stored, and data representative of a specific marking that is associated to the content parts to be stored;
- in step (ii) the control server may request that the content be transmitted a chosen number of time over the identified multicast connection;
- it may further comprise a step (iii) consisting in identifying peers that have not been able to join the identified multicast session, and then in establishing unicast connections between these identified peers and the content serving means to transmit to them their respective associated content parts. In a variant, step (iii) may consist in identifying peers, that have not been able to join the identified multicast session, from requests generated by these identified peers to request for parts of the previously distributed content, then in transmitting messages from the control server to these identified peers (Pi) to inform them that the content will soon be distributed by means of a new identified multicast session and to identify content parts that have been respectively associated to them for storing purpose, and then in ordering to the content serving means to initiate this new identified multicast session to transmit again the content to the identified peers;
- it may further comprise a step (iv) consisting, each time the control server receives a content request for obtaining at least identified parts of a content, from a peer, in sending a response to this requesting peer to propose it to listen to at least one identified multicast connection, then in sending a command request to at least one peer, which stores these requested content parts, so that it starts transmitting these requested content parts over the identified multicast connection;
   ➢ in step (iv) the command request may specify the number of time the requested content parts must be transmitted over the identified multicast connection;
   ➢ the control server may proceed to step (iv) when it receives content requests for obtaining identified parts of the same content from a number of peers that is greater than a chosen threshold;
   ➢ each time a requesting peer has succeed to receive its identified content parts over several multicast connections, it may transmit a message to the control server to inform it that its reception is finished;
      - when each requesting peer has informed the control server that it has finished to receive its identified content parts, the control server may transmit a command request to each peer having provided these identified content parts to ask it to stop its transmission;
   ➢ each time the control server receives a content request for obtaining at least identified parts of a content, from a peer, the response it sends to this requesting peer may comprise a list of peers that are currently transmitting these identified content parts, in order the requesting peer decides on its own of the number of multicast connections it wants to listen to;
- before transmitting a content having an initial size equal to q parts, one may apply a redundancy coding to it in order to transform it into a coded content having a final size equal to f + q parts, so that the whole content could be rebuilt when at least q parts of the f + q parts have been received.

The invention also provides a second method, intended for distributing contents to peers coupled to a communication network comprising at least one content serving means storing these contents and a control server for controlling content distribution to these peers, and comprising a step (iv) consisting, each time the control server receives a content request for obtaining at least identified parts of a content, from a peer, in sending a response to this requesting peer to propose it to listen to at least one identified multicast connection, then in sending a command request to at least one peer, storing these requested content parts, so that it starts transmitting these requested content parts over this identified multicast connection.

The second method according to the invention may include additional characteristics considered separately or combined, and notably:
- in step (iv) the command request may specify a number of time the requested content parts must be transmitted over the identified multicast connection;
- the control server may proceed to step (iv) when it receives content requests for obtaining identified parts of the same content from a number of peers that is greater than a chosen threshold;
- each time a requesting peer has succeed to receive its identified content parts over several multicast connections, it may transmit a message to the control server to inform it that its reception is finished;
   ➢ then each requesting peer has informed the control server that it has finished to receive its identified content parts, the control server may transmit a command request to each peer having provided these identified content parts to ask it to stop its transmission;
- each time the control server receives a content request for obtaining at least identified parts of a content, from a peer, the response it sends to this requesting peer may comprise a list of peers that are currently transmitting these identified content parts, in order the requesting peer decides of the number of multicast connections it wants to listen to;
- before a peer transmits a content request for obtaining at least identified parts of a content to the control server, one may proceed to a step (i) consisting in transmitting messages from the control server to the peers to inform them that this content will soon be distributed by means of an identified multicast session, and to identify parts of this content that have been respectively associated to them, and then to a step (ii) consisting in initiating this identified multicast session from at least one content serving means to transmit this content to the peers, in order those having decided to listen to this multicast session store the content parts that have been identified into their respective messages;
   ➢ in step (i) each message may contain an information chosen from a group comprising at least a list of identifiers of content parts, data representative of a modulo that must be used by the corresponding peer to identify the content parts to be stored, and data representative of a specific marking that is associated to the content parts to be stored;
   ➢ it may further comprise a step (iii) consisting in identifying peers that have not been able to join the multicast session, and then in establishing unicast connections between these identified peers and the content serving means to transmit to them their respective associated content parts;
   ➢ in a variant it may further comprise a step (iii) consisting in identifying peers that have not been able to join the multicast session from requests generated by these identified peers to request for parts of the previously distributed content, then in transmitting messages from the control server to these identified peers to inform them that the requested content will soon be distributed by means of a new identified multicast session and to identify content parts that have been respectively associated to them for storing purpose, and then in ordering to the content serving means to initiate this new identified multicast session to transmit again the content to the identified peers;
- before transmitting a content having an initial size equal to q parts, one may apply a redundancy coding to it in order to transform it into a coded content having a final size equal to f + q parts, so that the whole content could be rebuilt when at least q parts of the f + q parts have been received.

The invention also provides a control server, intended for controlling content distribution to peers that are coupled to a communication network comprising at least one content serving means storing contents, and arranged:
- for transmitting messages to these peers to inform them that a content will soon be distributed by means of an identified multicast session, and to identify content parts that have been respectively associated to them, and
- for ordering at least one content serving means to initiate this identified multicast session to transmit the content to the peers, in order those having decided to listen to the multicast session store the content parts that have been identified into their respective messages.

In a variant or in complement, this control server may be arranged, each time it receives a content request for obtaining at least identified parts of a content, from a peer, i) for sending a response to this requesting peer to propose it to listen to at least one identified multicast connection, then ii) for sending a command request to at least one peer, storing these requested content parts, so that it starts transmitting these requested content parts over the identified multicast connection.

### Brief description of the figures

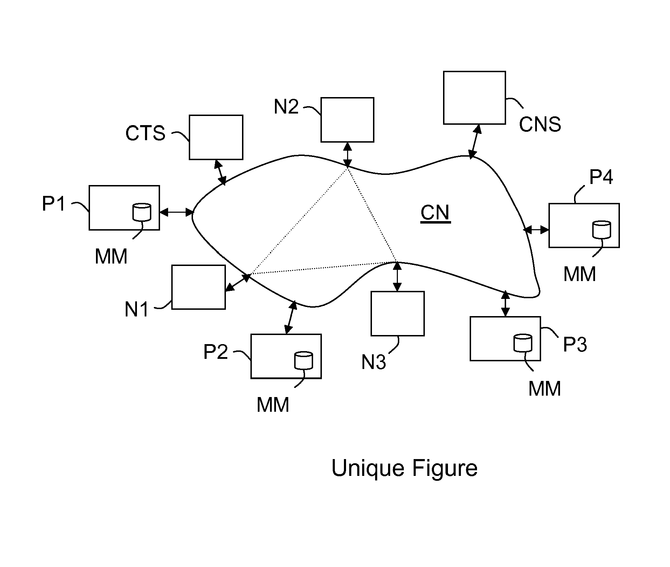

Other features and advantages of the invention will become apparent on examining the detailed specifications hereafter and the appended drawing, wherein the unique figure schematically illustrates a control server according to the invention, connected to a communication network to which are also coupled peers, a content server and a Content Distribution Network (or CDN).

### Detailed description of the preferred embodiment

The appended drawing may serve not only to complete the invention, but also to contribute to its definition, if need be.

The invention aims at offering methods which are intended for distributing contents to peers Pi that are coupled to a communication network CN which comprises at least one content serving means CNS, Nj and a control server CTS.

In the following description it will be considered that contents are videos (or movies) which can be transmitted to peers Pi that are arranged for being connected to Internet through at least one DSL (or optical fiber or else cable) communication network CN. But the invention is not limited to this type of content. Indeed, it concerns any type of digital content and notably audio (or music) files, data files, pictures to share, html files and software updates.

Moreover, in the following description it will be considered that peers Pi (here i = 1 to 4, as an example) are personal computers (or laptops) of users that are clients of a content provider. But the invention is not limited to this type of peer. Indeed, it concerns any type of user communication equipment comprising, or being coupled to, a memory means MM intended for storing contents, and capable of establishing communications with other peers in a peer-to-peer (P2P) mode. So a peer Pi may be also a content receiver (for instance a home gateway or a set-top box (STB) located in the user's home premise), a mobile or cellular telephone, or a personal digital assistant (PDA), provided that it comprises a communication modem (or any equivalent communication means). So, the communication network(s) CN, to which peers Pi are connected, may be of any type (fixed or wireless), provided that it is capable of offering content distribution services, such as video-on-demand (VOD) services for instance.

More, in the following description it will be considered that the infrastructure which allows the content distribution is a hybrid P2P/CDN (or Content Distribution (or Delivery) Network) architecture. So it comprises a communication network CN to which are connected two different types of content serving means arranged for storing contents to be distributed, and more precisely at least one content server CNS and a CDN (i.e. a set of computers Nj that are connected therebetween through the communication network CN). It is recalled that these computers Nj (here j = 1 to 3 as example) constitute nodes which are located at key locations of the communication network CN and which store copies of the contents stored into the content server CNS in order these contents be always accessible and could be received fast enough when not enough peers Pi are present (i.e. effectively connected to the communication network CN). But the invention is not limited to this type of content distribution infrastructure. Indeed, it concerns any type of P2P content distribution infrastructure comprising or not a CDN.

As mentioned before the invention offers notably methods intended for allowing distribution of contents between peers Pi.

The methods, according to the invention, can be implemented by a content distribution infrastructure, and more precisely by a control server CTS, according to the invention, and by content serving means (here a content server CNS and nodes Nj of a CDN).

A first method according to the invention comprises at least two steps (i) and (ii).

The first step (i) is implemented each time a content c must be distributed to peers Pi.

According to the invention, before being distributed to peers Pi, a content c is divided into parts (or pieces or else items) p(c) which are associated to the peers Pi. It is important to note that a same content part p(c) may be associated to several peers Pi in order to optimize the future distribution of this content part p(c) between peers, in a P2P mode. Such an association may be carried out by the control server CTS. But, this is not mandatory. Moreover, the content division may be defined by the control server CTS.

This first step (i) consists in generating, into the control server CTS, messages intended to inform the peers Pi that a content will soon be distributed by means of an identified multicast session, and to identify parts p(c) of a content c (to be distributed) that have been respectively associated to these peers Pi, and then in transmitting these messages from the control server CTS to the concerned peers Pi, via the communication network CN.

Each message regarding an upcoming multicast session may be transmitted to the concerned peer Pi through a unicast connection (or communication).

Of course, only peers Pi that are effectively connected to the communication network CN can be informed of the future distribution of a content c and of the content parts p(c) that have been respectively associated to them for local storing purpose.

It is important to note that it is possible for a peer Pi to store the whole content c (i.e. every part p(c) of this content c).

A message may contain any type of information allowing a peer Pi to identify the content parts p(c) that have been associated to it. For instance, this information may be a list of identifiers of content parts p(c), or data representative of a modulo that must be used by the corresponding peer Pi to identify the content parts p(c) to be stored, or else data representative of a specific marking that is associated to the content parts p(c) to be stored.

The goal of the second step (ii) of the method according to the invention is to come to a state where all peers Pi (or most of them) have at least parts p(c) of the content c, so that the whole content c could be found at least once across these peers Pi (through P2P communications).

This second step (ii) consists in initiating the identified multicast session (decided by the control server CTS during step (i)) from at least one content serving means CNS, Nj in order to transmit the concerned content c (i.e. all its parts p(c)) to the peers Pi. To this effect, the control server CTS generates a message (or request) containing an identifier of multicast session and ordering to its addressee(s) (i.e. at least one content serving means CNS and/or Nj) to initiate this identified multicast session. One means here by "identifier" an (IP) multicast address.

It is important to note that the content c can be transmitted to the peers Pi over a multicast session either by the content server CNS or by at least one node Nj of the CDN or else by the content server CNS and by at least one node Nj of the CDN.

It is also important to note that in step (ii) the control server CTS may request that the content c be transmitted a chosen number of time over the identified multicast connection.

Before distributing a content c to peers Pi, one may apply a redundancy coding to this content c in order to transform it into a coded content c'. So, if the content c to be transmitted has an initial size equal to q (parts), its final size after coding is equal to f + q (parts). With such a coding, a peer Pi will need only to receive and decode a portion, having a size at least equal to q (parts), of a coded content c' (of size f + q (parts)) to get the initial content c.

Such a coding is intended to increase the number of peers Pi that will be capable of listening to the same multicast connection.

Such a coding can be either systematic or non-systematic. With a systematic coding, a portion (usually the beginning) of size q of the coded content c' of size f + q is actually the content c itself. So, this eases decoding since many parts of the received content are already decoded (in fact the q first parts of the coded content c' are not coded). With a non-systematic coding, it is not possible to access only portions of the content, because the whole content c can only be decoded once a portion of size q has been received (because these q parts are coded). But, this is advantageous in terms of security.

When using redundancy coding, no portion of the content is more important than an other (because one needs to receive at least q parts amongst the f + q parts of the coded content c'). This means that when previously a content c of size q was divided into X parts of size q/X, the coded content c' is now divided into (1 + f/q)*X parts of size q/X. So, f/q more parts are available and a requesting peer can listening to any of these parts until it has received a portion having a size at least equal to q.

When such a coding is implemented, each requesting peer Pi may inform the control server CTS of the n parts p(c) of content c it stores, so that the control server CTS may choose among the remaining [(1 + f/q)*X] - n parts the requesting peer should be listening to in order to complete the whole content c. This is advantageous because since any part p(c) would fit, it is likely such parts would have been already currently transmitted by transmitting peers.

Any type of redundancy coding known by the man skilled in the art may be used.

When a connected peer Pi, having decided to listen to a multicast session (identified into a received message coming from the control server CTS), receives the distributed content c (or the coded content c'), it stores only the content parts p(c) that have been identified into this received message, into its storing means MM.

This mode of content distribution allows a minimal use of the network bandwidth. Indeed, with a single emission of the new content, it makes sure a content c will be sufficiently spread across the whole P2P infrastructure. Using only one multicast session leads to cost savings when the bandwidth of the initial content serving means (CTS or CDN) is expensive. But, such a content distribution can only be used for peers Pi which are connected during the distribution phase. In order the initially not available peers Pi' could receive the content parts p(c) that have been associated to them, the invention proposes to implement a third step (iii) after step (ii).

Step (iii) consists in identifying peers Pi' that have not been able to join a multicast session, and then in establishing unicast connections between these identified peers Pi' and each concerned content serving means CNS and/or Nj to transmit to them their respective associated content parts p(c).

In a variant, step (iii) may consist in identifying peers Pi' that have not been able to join a multicast session, then in transmitting messages from the control server CTS to the identified peers Pi' to inform them that a content c will soon be distributed by means of a (new) identified multicast session and to identify content parts p(c) that have been respectively associated to them for storing purpose. Then, the control server CTS generates a message (or request) containing an identifier of the new multicast session and ordering to its addressee(s) (i.e. at least one content serving means CNS and/or Nj) to initiate this identified new multicast session to transmit (again) the whole content c to the identified peers Pi. One means here by "identifier" an (IP) multicast address.

In both variants of step (iii), peers Pi' may be identified from the requests they generate and transmit to the control server CTS in order to request for parts p(c) of the previously distributed content c.

Once the content c has been spread across the P2P infrastructure, peers Pi may start to exchange therebetween content parts p(c) they respectively store, in a P2P mode. In a classical infrastructure these exchanges can be done by means of unicast connections (or communications) between couples of peers Pi. But, to optimize the use of the network bandwidth the invention proposes a second method in which at least some of these exchanges are done by means of multicast connections (or communications) between peers.

It is important to note that this second method may be implemented after the first method (steps (i) and (ii) and possible step (iii)) has been implemented into the infrastructure. But, this is not mandatory. Indeed, a content may have been previously distributed to connected peers Pi by means of another method than the first one.

In the following description, it will be considered as example, that the second method (or step (iv)) is implemented just after steps (i) and (ii) (and also possibly step (iii)) have been implemented.

The second method, according to the invention, comprises a fourth step (iv) which may be implemented by the control server CTS each time it receives a content request for obtaining at least identified parts p(c) of a content c from a peer Pi. In such a case, the control server CTS sends a response to the requesting peer Pi to propose it to listen to at least one identified multicast connection (address or port number). Then, the control server CTS sends a command request (or message) to at least one peer Pi', which stores the requested content parts p(c), to order that it starts transmitting the requested content parts p(c) over the identified multicast connection.

During step (iv) the control server CTS may possibly specify into its command request the number of time the requested content parts p(c) must be transmitted over the identified multicast connection, for instance in a carousel mode.

For efficiency reasons, the control server CTS may only proceed to step (iv) if and only if it receives content requests for obtaining identified parts p(c) of the same content c from a number of peers Pi that is greater than a chosen threshold. This threshold may be equal to 2. But it may be greater than 2. For instance it may be equal to 4 ou 5.

In the case where the control server CTS detects that a requested content c is already distributed over multicast links by one or several sending peers Pi', it does not need to send any command request to these sending peers Pi'. Indeed, a network equipment, such as a DSLAM ("Digital Subscriber Line Access Multiplexer"), will take care of providing the requested content c to the requesting peer Pi thanks to the well-known IGMP mechanism.

Moreover, since a requesting peer Pi may listen to several multicast connections, each time it has succeed to receive its identified content parts p(c) over several multicast connections, it may transmit an information message to the control server CTS to inform it that its reception is finished. So, the control server CTS knows at any time how many requesting peers Pi are listening to a requested content c. Such information message needs to be sent to the control server CTS since the typical IGMP "leave" message that could replace it would be sent to the sending peer Pi' and would therefore never reach the control server CTS. So, when each requesting peer Pi has informed the control server CTS that it has finished to receive its identified content parts p(c), this control server CTS may decide to transmit a command request to each sending peer Pi' that has provided, or his still currently providing, these identified content parts p(c) to ask it to stop its transmission over its multicast connection.

Furthermore, each time the control server CTS receives a content request for obtaining at least identified parts p(c) of a content c from a peer Pi, it may send a response to this requesting peer Pi that comprises a list of sending peers Pi' that are currently transmitting these identified content parts p(c). So, this is the requesting peer Pi that decides on its own of the number of multicast connections it wants to listen to. This means that the requesting peer Pi can use as much bandwidth as available or as it is allowed to. In this case, the requesting peer Pi has also to send a specific message to the control server CTS to inform it of the stream(s) (or multicast session(s)) it is listening to, in order it could know at any time how many peers Pi are currently listening to a given sending peer Pi'.

It is important to note that the redundancy coding may be also implemented during the second method to transmit the contents.

The invention is not limited to the embodiments of methods and control server described above, only as examples, but it encompasses all alternative embodiments which may be considered by one skilled in the art within the scope of the claims hereafter.

## Claims

1. Method for distributing contents to peers (Pi) coupled to a communication network (CN) comprising at least one content serving means (CNS, Nj) storing said contents and a control server (CTS) for controlling content distribution to said peers (Pi), **characterized in that** it comprises the steps of:
i) transmitting messages from said control server (CTS) to said peers (Pi) to inform them that a content will soon be distributed by means of an identified multicast session, and to identify parts of said content that have been respectively associated to them, and
ii) initiating said identified multicast session from at least one content serving means (CNS, Nj) to transmit said content to said peers (Pi), in order those having decided to listen to said multicast session store the content parts that have been identified into their respective messages.

2. Method according to claim 1, **characterized in that** in step (i) each message contains an information chosen from a group comprising at least a list of identifiers of content parts, data representative of a modulo that must be used by the corresponding peer to identify the content parts to be stored, and data representative of a specific marking that is associated to the content parts to be stored.

3. Method according to one of claims 1 and 2, **characterized in that** in step (ii) said control server (CTS) may request that the content be transmitted a chosen number of time over the identified multicast connection.

4. Method according to one of claims 1 to 3, **characterized in that** it further comprises a step (iii) consisting in identifying peers (Pi) that have not been able to join said multicast session, and then in establishing unicast connections between these identified peers (Pi) and said content serving means (CNS, Nj) to transmit to them their respective associated content parts.

5. Method according to one of claims 1 to 3, **characterized in that** it further comprises a step (iii) consisting in identifying peers (Pi) that have not been able to join said multicast session from requests generated by said identified peers (Pi) to request for parts of said previously distributed content, then in transmitting messages from said control server (CTS) to said identified peers (Pi) to inform them that said content will soon be distributed by means of a new identified multicast session and to identify content parts that have been respectively associated to them for storing purpose, and then in ordering to said content serving means (CNS, Nj) to initiate said new identified multicast session to transmit again said content to said identified peers (Pi).

6. Method according to one of claims 1 to 5, **characterized in that** it further comprises a step (iv) consisting, each time said control server (CTS) receives a content request for obtaining at least identified parts of a content, from a peer (Pi), in sending a response to said requesting peer (Pi) to propose it to listen to at least one identified multicast connection, then in sending a command request to at least one peer (Pi'), storing said requested content parts, so that it starts transmitting said requested content parts over said identified multicast connection.

7. Method according to one of claims 1 to 6, **characterized in that** before transmitting a content having an initial size equal to q parts, one applies a redundancy coding to it in order to transform it into a coded content having a final size equal to f + q parts, so that the whole content could be rebuilt when at least q parts of the f + q parts have been received.

8. Method for distributing contents to peers (Pi) coupled to a communication network (CN) comprising at least one content serving means (CNS, Nj) storing said contents and a control server (CTS) for controlling content distribution to said peers (Pi), **characterized in that** it comprises a step (iv) consisting, each time said control server (CTS) receives a content request for obtaining at least identified parts of a content, from a peer (Pi), in sending a response to said requesting peer (Pi) to propose it to listen to at least one identified multicast connection, then in sending a command request to at least one peer (Pi'), storing said requested content parts, so that it starts transmitting said requested content parts over said identified multicast connection.

9. Method according to claim 8, **characterized in that** in step iv) said command request specifies a number of time said requested content parts must be transmitted over said identified multicast connection.

10. Method according to one of claims 8 and 9, **characterized in that** said control server (CTS) proceeds to step (iv) when it receives content requests for obtaining identified parts of the same content from a number of peers (Pi) that is greater than a chosen threshold.

11. Method according to one of claims 8 to 10, **characterized in that** each time a requesting peer (Pi) has succeed to receive its identified content parts over several multicast connections, it transmits a message to said control server (CTS) to inform it that its reception is finished.

12. Method according to claim 11, **characterized in that** when each requesting peer (Pi) has informed said control server (CTS) that it has finished to receive its identified content parts, said control server (CTS) transmits a command request to each peer (Pi') having provided said identified content parts to ask it to stop its transmission.

13. Method according to one of claims 8 to 12, **characterized in that** each time said control server (CTS) receives a content request for obtaining at least identified parts of a content, from a peer (Pi), the response it sends to said requesting peer (Pi) comprises a list of peers (Pi') that are currently transmitting said identified content parts, in order said requesting peer (Pi) decides of the number of multicast connections it wants to listen to.

14. Method according to one of claims 8 to 13, **characterized in that**, before a peer (Pi) transmits a content request for obtaining at least identified parts of a content to said control server (CTS), one proceeds to a step (i) consisting in transmitting messages from said control server (CTS) to said peers (Pi) to inform them that said content will soon be distributed by means of an identified multicast session, and to identify parts of said content that have been respectively associated to them, and then to a step (ii) consisting in initiating said identified multicast session from at least one content serving means (CNS, Nj) to transmit said content to said peers (Pi), in order those having decided to listen to said multicast session store the content parts that have been identified into their respective messages.

15. Method according to claim 14, **characterized in that** it further comprises a step (iii) consisting in identifying peers (Pi) that have not been able to join said multicast session, and then in establishing unicast connections between these identified peers (Pi) and said content serving means (CNS, Nj) to transmit to them their respective associated content parts.

16. Method according to claim 14, **characterized in that** it further comprises a step (iii) consisting in identifying peers (Pi) that have not been able to join said multicast session from requests generated by said identified peers (Pi) to request for parts of said previously distributed content, then in transmitting messages from said control server (CTS) to said identified peers (Pi) to inform them that said content will soon be distributed by means of a new identified multicast session and to identify content parts that have been respectively associated to them for storing purpose, and then in ordering to said content serving means (CNS, Nj) to initiate said new identified multicast session to transmit again said content to said identified peers (Pi).

17. Method according to one of claims 8 to 16, **characterized in that** before transmitting a content having an initial size equal to q parts, one applies a redundancy coding to it in order to transform it into a coded content having a final size equal to f + q parts, so that the whole content could be rebuilt when at least q parts of the f + q parts have been received.

18. Control server (CTS) for controlling content distribution to peers (Pi) coupled to a communication network (CN) comprising at least one content serving means (CNS, Nj) storing contents, **characterized in that** it is arranged i) for transmitting messages to said peers (Pi) to inform them that a content will soon be distributed by means of an identified multicast session, and to identify content parts that have been respectively associated to them, and ii) for ordering at least one content serving means (CNS, Nj) to initiate said identified multicast session to transmit said content to said peers (Pi), in order those having decided to listen to said multicast session store the content parts that have been identified into their respective messages.

19. Control server (CTS) for controlling content distribution to peers (Pi) coupled to a communication network (CN) comprising at least one content serving means (CNS, Nj) storing contents, **characterized in that** it is arranged, each time it receives a content request for obtaining at least identified parts of a content, from a peer (Pi), i) for sending a response to said requesting peer (Pi) to propose it to listen to at least one identified multicast connection, then ii) for sending a command request to at least one peer (Pi'), storing said requested content parts, so that it starts transmitting said requested content parts over said identified multicast connection.
